# EUROPEAN PATENT APPLICATION

(11) **EP 1 671 840 A1**
(43) Date of publication of application: **21.06.2006**
(21) Application number: 05759973.0
(22) Date of filing: 14.06.2005
(51) Int. Cl.: B60N 3/02, G09F 23/00

(54) **HAND GRIP**

(30) Priority: 15.06.2004 RU 2004117464; 04.02.2005 RU 2005102735
(71) Applicant: GORDIENKO, Oleg, Grigorevich, Zaozersk 184310 (RU); GRIGASH, Alexandr, Mihailovich, Sevastopol, 335014 (UA)
(72) Inventor: GORDIENKO, Oleg, Grigorevich, Zaozersk 184310 (RU); GRIGASH, Alexandr, Mihailovich, Sevastopol, 335014 (UA)
(74) Representative: Bucher, Ralf Christian
(86) International application number: PCT/RU2005/000326
(87) International publication number: WO 2005/123449

(57) **Abstract**

The inventive belt-suspended handgrip relates to devices for passenger transport means. The invention provides for several embodiments of the handgrip which is made from a plate provided with a slot for introducing and extracting a card and whose structural design enables to rapidly change information cards.

## Description

### FIELD OF THE INVENTION

The present invention relates to devices for passenger vehicles, namely to handgrips to be suspended in a vehicle.

### BACKGROUND OF THE INVENTION

There has been known a handgrip to be suspended in a vehicle and provided with means for accommodating advertisements (Utility Model DE9104744U, published 1991). This handgrip is embodied in the form of a frame with a window for displaying cards containing information of advertising nature (information cards). Two embodiments of a slot for an information card are provided. With the first embodiment, said slot is made in the interior of stays and crossbars of the frame and is open from the end of said frame to insert and remove the information card. Since the window provides access to the card, it is used to remove and replace the card.

With the second embodiment, the slot is made on the outside of the frame in the form of a recess on its stays. The information card is applied to stays in the recess and glued.

The drawback to the known device with respect to the both embodiments thereof consists in that the frame is not strong enough and may be deformed (bent) and even broken with relative ease. In addition, with the second embodiment, gluing of the card makes its replacement difficult and labor-consuming. With the both embodiments, information cards are not protected against vandalism.

There has been also known a handgrip to be suspended in a vehicle and provided with means for accommodating advertisements (International Application PCT/CN03/00545, Publication WO 04/007240, dated January 22, 2004). This handgrip is made of a plate to enable arrangement and holding of an information card by means of a second plate connected to a first one. The information card is held between the plates when they are connected. The plates are made transparent. The drawbacks to this device consist in that, firstly, it fails to provide for the arrangement of information cards having a considerable thickness, since this may result in deformation. Secondly, this device suggests a labor-consuming operation for replacing the information card. When replacing cards, the both plates of a handgrip should be disconnected and then again connected to another information card.

### SUMMARY OF THE INVENTION

The claimed inventions are intended, as their closest prior arts, to enable display of replaceable information cards, by means of a handgrip. As distinct from the prior art, the present inventions provide for the arrangement of information cards in slots provided in a plate from which a handgrip is made. This allows free arrangement of information cards of a considerable thickness (more than 0.2 mm) with due regard for a corresponding slot size. Moreover, the first embodiment of the inventive handgrip allows for the arrangement of several cards in a slot and their removal one by one by passengers in a vehicle. The other embodiments of the inventive handgrip, more specifically, their particular cases, make it possible to limit access to information cards for passengers, providing their arrangement inside the plate (the second embodiment) or between the plates (the third and fourth embodiments). In so doing, a convenient replacement of cards is ensured. In particular, insertion of a new card makes it possible to push out a card inserted earlier. There is no need to disconnect components of the handgrip. It should be noted that all inventions afford convenient and quick replacement of information cards by operating personnel.

The above technical effect is accomplished in the first embodiment of a handgrip to be suspended in a vehicle, said handgrip being embodied in the form of a plate to enable arrangement and holding of an information card, said plate is provided with a groove formed by a recess on the plate surface and a rim along the edge of said recess, said rim being open for inserting several information cards and their removing by passengers in the vehicle.

Said groove may be formed by a rectangular portion of the surface and rims along three sides of this portion.

A recess on the plate surface may be made rectangular, more specifically - on a rectangular portion of the plate surface, with rims being located along two opposite sides of the recess, at least on one of two other sides of the recess the surface of said recess is made with a smooth transition to an adjacent surface of the plate and forms (along with the rims) slots for inserting and/or removing a card.

A recess surface may be provided (from two sides) with a smooth transition to an adjacent surface of the plate and may form (along with the rims) slots for inserting and/or removing a card.

Said groove may be provided with a spring drawing information cards up to the plate surface or to the rims.

Said groove may be embodied to accommodate several information cards at one time and to enable removal of information cards one by one.

The above technical effect is accomplished in the second embodiment of a handgrip to be suspended in a vehicle, said handgrip being embodied in the form of a plate to enable arrangement and holding of an information card, said plate is provided with a groove inside it, said groove being open for insertion and removal of an information card, the plate surface being the outer surfaces of walls of said groove.

The plate may be embodied transparent and the groove may be made open from opposite sides of the plate. Specifically, the groove may be open from opposite ends of the plate.

The above technical effect is accomplished in the third embodiment of a handgrip to be suspended in a vehicle, said handgrip being embodied in the form of two plates connected to each other, one of which being made of a transparent material to enable arrangement of an information card between the plates, at least one of said plates is provided with a slot in the form of a recess on the plate surface, said slot facing the other plate and being open from opposite sides for insertion and removal of an information card.

The handgrip may be embodied in the form of three plates connected to each other, a middle plate being made of a nontransparent material with grooves at opposite sides connected to transparent plates.

One of the plates may be made of a nontransparent material with a groove in which a transparent plate is arranged.

The both plates may be made of a transparent material. In doing so, each of the plates is provided with a groove in the form of a recess of a surface, said grooves forming in the handgrip a single slot for arranging an information card.

The groove may be embodied in the form of a strip and open from opposite ends of the plate.

One of the plates may be provided with a recess and the other - with a protuberance arranged in the recess of the opposite plate with a clearance between them to accommodate the information card. In so doing, surfaces of said recess and protuberance may be made cylindrical; a slot formed by them being open along the forming cylindrical surfaces.

The above technical effect is accomplished in the fourth embodiment of a handgrip to be suspended in a vehicle, said handgrip being embodied in the form of two plates connected to each other to enable arrangement of an information card between the plates, at least one of said plates is provided with a protuberance facing the other plate and forming between the plates a groove, which is open to insert and remove an information card from the end of at least one of the plates.

Said recesses may be provided on each of the plates.

One or both of the plates may be made of a transparent material.

### BRIEF DESCRIPTION OF THE DRAWINGS

With reference to the accompanying drawings:
FIG. 1 illustrates a handgrip made in accordance with the first embodiment of the present invention;
FIG. 2 illustrates a handgrip made in accordance with the second embodiment of the present invention;
FIGS. 3 and 4 illustrate a handgrip made in accordance with the third embodiment of the present invention;
FIG. 5 illustrates a handgrip made in accordance with the fourth embodiment of the present invention

### BEST MODES TO CARRY OUT THE INVENTION

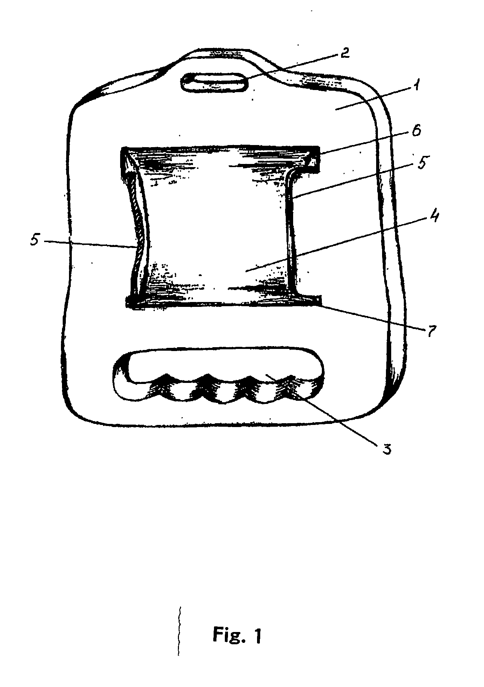

A handgrip as depicted in FIG. 1 is embodied in the form of a plate 1 with an opening 2 for connection with a belt by means of which the handgrip is suspended in a vehicle, an opening 3 for a passenger hand and a groove formed by a recess 4 and rims 5. A rim shown in FIG. 1 from the left is cut in part for clearness. The rims form slots 6 and 7. A slot 6 allows insertion of several information cards into the groove at one time. A slot 7 enables removal of information cards one by one. To this end, a card is pressed by a finger in order to be deformed in accordance with the surface of the recess 4 and inserted into the slot 7 along a "rounded" portion of the recess 4.

The plate, along with the rims, may be made at the expense of injection molding from aluminum alloy or plastic.

Of course, the rims may be manufactured separately and then attached on the plate (handgrip) thereby forming a groove with an outer surface of said plate (handgrip).

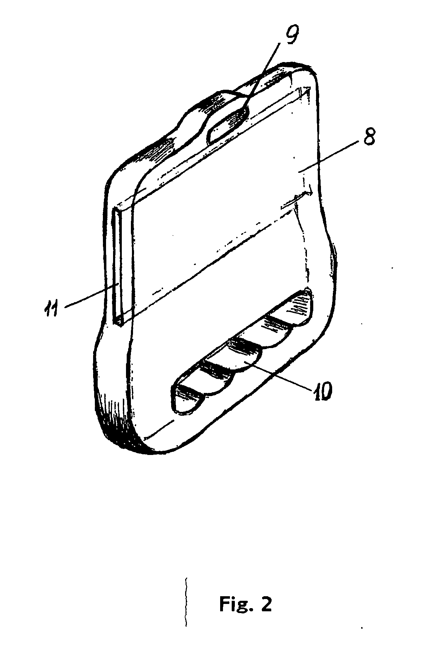

A handgrip as depicted in FIG. 2 is embodied in the form of a plate 8 made of a transparent material with an opening 9 for connection with a belt by means of which the handgrip is suspended in a vehicle, an opening 10 for a passenger hand. A groove 11 is provided inside the plate and open from opposite ends of the plate, thus enabling a quick replacement of information cards. The plate may be manufactured from, for example, acrylic glass.

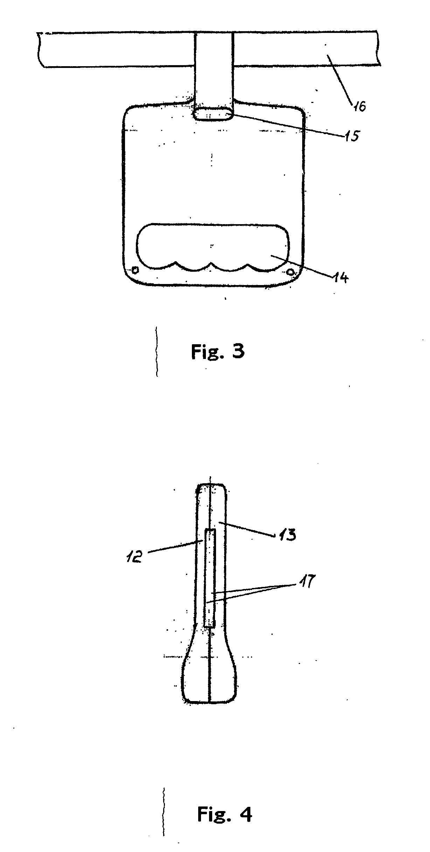

A handgrip as depicted in FIGS. 3 and 4 is composed of plates 12 and 13, which are bolted or glued using a transparent adhesive. The both plates are provided with grooves 14 (for a hand) and 15 (for a belt by means of which they are attached to a crossbar 16). Each of the plates 12 and 13 is provided with a recess 17. Recesses 17 form a single groove. An information card is held within the groove at the expense of friction between the surface of the card and that of the groove, which is ensured by conformity of the card sizes and the groove sizes and selection of materials from which the card and handgrip are made. The card may be inserted into the groove from opposite ends of the handgrip. Such a design allows for quick replacement of information cards.

The both transparent plates and, accordingly, the handgrip as a whole may be manufactured from acrylic glass.

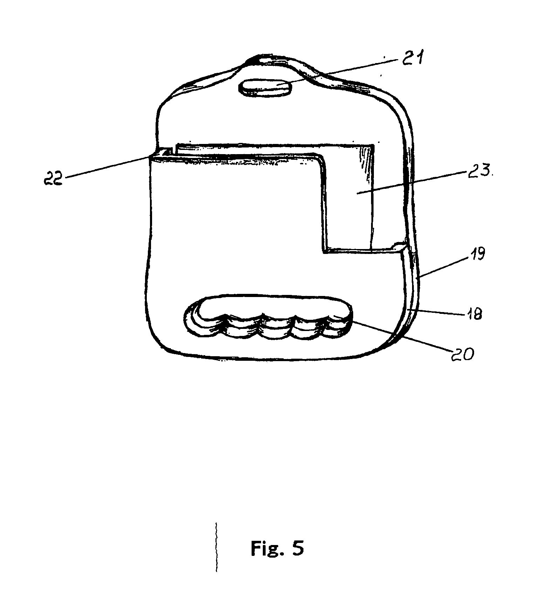

A handgrip as depicted in FIG 5 is embodied in the form of plates 18 and 19, which are bolted or glued using a transparent adhesive. The both plates are provided with a groove 20 for a hand. The plate 19 is provided with a groove 21 for a belt. The plate 18 is provided with a protuberance 22, which, together with surfaces of the plates facing each other, forms a groove for insertion and removal of an information card 23. The groove may accommodate several information cards for their removal by passengers in a vehicle.

The plates 18 and 19 may be made of a transparent or nontransparent material, since in the case of using a nontransparent material, it is contemplated that the cards are partially projected beyond the groove.

## Claims

1. A handgrip to be suspended in a vehicle, said handgrip being embodied in the form of a plate to enable arrangement and holding of an information card, **characterized in that** said plate is provided with a groove formed by a portion of the plate surface and a rim along the edge of said portion, said rim being open for inserting several information cards and their removing by passengers in the vehicle.

2. A handgrip as claimed in Claim 1, **characterized in that** the groove is formed by a rectangular portion of the surface and rims along three sides of this portion.

3. A handgrip as claimed in Claim 1, **characterized in that** the surface of the plate is provided with a recess with its surface forming a groove together with rims.

4. A handgrip as claimed in Claim 3, **characterized in that** said recess is made rectangular, said rims are located along two opposite sides of the recess, at least on one of two other sides of the recess the surface of said recess is made with a smooth transition to an adjacent surface of the plate and forms with the rims slots for inserting and/or removing a card.

5. A handgrip as claimed in Claim 4, **characterized in that** from two sides of the recess, its surface is made with a smooth transition to an adjacent surface of the plate and forms with the rims slots for inserting and/or removing a card.

6. A handgrip as claimed in Claim 1, **characterized in that** it is provided with a spring drawing information cards up to the plate surface or to the rims.

7. A handgrip as claimed in Claim 1, **characterized in that** the groove is made to accommodate several information cards at one time and to enable removal of information cards one by one.

8. A handgrip to be suspended in a vehicle, said handgrip being embodied in the form of a plate to enable arrangement and holding of an information card, **characterized in that** said plate is provided with a groove inside it, said groove being open for insertion and removal of an information card, the plate surface being the outer surfaces of walls of said groove.

9. A handgrip as claimed in Claim 8, **characterized in that** the plate is made of a transparent material and the groove is open from opposite sides of the plate.

10. A handgrip as claimed in Claim 9, **characterized in that** the groove is open from opposite ends of the plate.

11. A handgrip to be suspended in a vehicle, said handgrip being embodied in the form of two plates connected to each other, one of which being made of a transparent material to enable arrangement of an information card between the plates, **characterized in that** at least one of said plates is provided with a slot in the form of a recess on the plate surface, said slot facing the other plate and being open from opposite sides for insertion and removal of an information card.

12. A handgrip as claimed in Claim 11, **characterized in that** it is embodied in the form of three plates connected to each other, a middle plate being made of a nontransparent material with grooves at opposite sides connected to transparent plates.

13. A handgrip as claimed in Claim 11, **characterized in that** one of the plates is made of a nontransparent material with a groove in which a transparent plate is arranged.

14. A handgrip as claimed in Claim 11, **characterized in that** the both plates are made of a transparent material.

15. A handgrip as claimed in Claim 14, **characterized in that** each of the plates is provided with a groove in the form of a recess of a surface, said grooves forming in the handgrip a single slot for arranging an information card.

16. A handgrip as claimed in Claim 11, **characterized in that** the groove is embodied in the form of a strip and being open from opposite ends of the plate.

17. A handgrip as claimed in Claim 11, **characterized in that** one of the plates is provided with a recess and the other - with a protuberance arranged in the recess of the opposite plate with a clearance between them to accommodate an information card.

18. A handgrip as claimed in Claim 17, **characterized in that** surfaces of said recess and protuberance are made cylindrical, a slot formed by them being open along the forming cylindrical surfaces.

19. A handgrip to be suspended in a vehicle, said handgrip being embodied in the form of two plates connected to each other to enable arrangement of an information card between the plates, **characterized in that** at least one of said plates is provided with a protuberance facing the other plate and forming between the plates a groove, which is open to insert and remove an information card from the end of at least one of the plates.

20. A handgrip as claimed in Claim 19, **characterized in that** the recesses are provided on each of the plates.

21. A handgrip as claimed in Claim 19, **characterized in that** one or both of the plates are made of a transparent material.
